# EUROPEAN PATENT SPECIFICATION

(11) **EP 0 764 878 B1**
(45) Date of publication and mention of the grant of the patent: **24.05.2000**
(21) Application number: 96306556.0
(22) Date of filing: 10.09.1996
(51) Int. Cl.: G03C 1/498

(54) **Photothermographic elements comprising hydroxamic acid developers**
Photothermographische Elemente, die Hydroxamsäure-Entwicklersubstanzen enthalten
Eléments photothermographiques comportant des développateurs d'acide hydroxamique

(30) Priority: 19.09.1995 GB 9519085
(43) Date of publication of application: 26.03.1997
(73) Proprietor: Imation Corp., Oakdale, MN 55128 (US)
(72) Inventor: Sansbury, Francis H., Sawbridgeworth, Herts. CM21 9LZ (GB); Oliff, David B., Bishops Stortford, Herts. CM22 6QZ (GB); Grieve, Duncan McL. A., Saffron Walden, Essex CB11 4BG (GB)
(74) Representative: Bowman, Paul Alan

(56) References cited:
- EP-A- 0 616 014
- US-A- 3 751 252
- US-A- 4 123 282

## Description

The invention relates to photothermographic media of the dry silver type capable of generating image density that exceeds background fog by at least 1.2 optical density units (measured in reflection mode) in which the developing agent comprises a hydroxamic acid derivative.

Silver halide-containing, photothermographic imaging materials, i.e., heat-developable photographic elements processed with heat, and without liquid development, have been known in the art for many years. These materials, also known as "dry silver" compositions or emulsions, generally comprise a support having coated thereon: (a) a photosensitive material which generates silver atoms when irradiated; (b) a relatively non-photosensitive, reducible silver source; (c) a reducing agent, i.e., a developer for silver ion, for example, the silver ion in the non-photosensitive, reducible silver source; and (d) a binder.

The photosensitive material is generally photographic silver halide which must be in catalytic proximity to the non-photosensitive, reducible silver source. Catalytic proximity requires an intimate physical association of these two materials so that when silver atoms (also known as silver specks, clusters, or nuclei) are generated by irradiation or light exposure of the photographic silver halide, those nuclei are able to catalyze the reduction of the reducible silver source. It has long been understood that silver atoms (Ag°) are a catalyst for the reduction of silver ions, and that the photosensitive silver halide can be placed into catalytic proximity with the non-photosensitive, reducible silver source in a number of different fashions. For example, catalytic proximity can be accomplished by partial metathesis of the reducible silver source with a halogen-containing source as disclosed in U.S. Patent No. 3,457,075; by coprecipitation of silver halide and the reducible silver source material as disclosed in U.S. Patent No. 3,839,049; and other methods that intimately associate the photosensitive, photographic silver halide and the non-photosensitive, reducible silver source.

The non-photosensitive, reducible silver source is a material that contains silver ions. Typically, the preferred non-photosensitive reducible silver source is a silver salt of a long chain aliphatic carboxylic acid having from 10 to 30 carbon atoms. The silver salt of behenic acid or mixtures of acids of similar molecular weight are generally used. Salts of other organic acids or other organic materials, such as silver imidazolates, have been proposed. U.S. Patent No. 4,260,677 discloses the use of complexes of inorganic or organic silver salts as non-photosensitive, reducible silver sources.

In both photographic and photothermographic emulsions, exposure of the photographic silver halide to light produces small clusters of silver atoms (Ag°). The imagewise distribution of these clusters is known in the art as a latent image. This latent image is generally not visible by ordinary means. Thus, the photosensitive emulsion must be further processed to produce a visible image. This is accomplished by the reduction of silver ions which are in catalytic proximity to silver halide grains bearing the clusters of silver atoms, i.e., the latent image.

The imaging arts have long recognized the fields of photothermography and thermography as being clearly distinct from that of photography. Photothermographic elements significantly differ from conventional silver halide photographic elements which require wet-processing.

In photothermographic imaging elements, a latent image is amplified and rendered visible by the action of a developer incorporated within the element. Heat is essential for development process and temperatures of over 100°C are routinely required. In contrast, conventional wet-processed photographic imaging elements require processing in aqueous processing baths to provide a visible image, e.g., developing and fixing baths, and development is usually performed at a more moderate temperature, e.g., 30° to 50°C.

In photothermographic elements, only a small amount of silver halide is used to capture light and a different form of silver e.g., silver behenate, is used to generate the image with heat. Thus, the silver halide serves as a catalyst precursor for the development of the non-photosensitive, reducible silver source. In contrast, conventional wet-processed photographic elements use only one form of silver e.g., silver halide, which, upon development, is converted to silver. Additionally, photothermographic elements require an amount of silver halide per unit area that is as little as one-hundredth of that used in a conventional wet-processed silver halide.

Photothermographic systems employ a light-insensitive silver salt, such as silver behenate, which participates with the developer in developing the latent image. In contrast, photographic systems do not require a light- insensitive silver salt in the image-forming process. As a result, the image in photothermographic elements is produced primarily by reduction of the light-insensitive silver source (silver behenate) while the image in photographic black-and-white elements is produced primarily by the silver halide.

In photothermographic elements, all of the "chemistry" of the system is incorporated within the element itself. For example, photothermographic elements incorporate a developer i.e., a reducing agent for the non- photosensitive reducible source of silver within the element while conventional photographic elements do not. The incorporation of the developer into photothermographic elements can lead to increased formation of "fog" upon coating of photothermographic emulsions as compared to photographic emulsions. Even in so-called instant photography, developer chemistry is physically separated from the silver halide until development is desired. Much effort has gone into the preparation and manufacture of photothermographic elements to minimize formation of fog upon coating, storage, and post-processing aging.

Additionally, the unexposed silver halide in photothermographic elements inherently remains after development and the element must be stabilized against further development. In contrast, silver halide is removed from wet processed photographic elements after development to prevent further imaging i.e., the fixing step.

In photothermographic elements the binder is capable of wide variation and a number of binders are useful in preparing these elements. In contrast, photographic elements are limited almost exclusively to hydrophillic colloidal binders such as gelatin.

Because photothermographic elements require thermal processing, they pose different considerations and present distinctly different problems in manufacture and use. In addition, the effects of additives e.g., stabilizers, antifoggants, speed enhancers, sensitizers, supersensitizers, etc., which are intended to have a direct effect upon the imaging process, can vary depending upon whether they have been incorporated in a photothermographic element or incorporated in a photographic element.

Distinctions between photothermographic and photographic elements are described in *Imaging Processes and Materials (Neblette's Eighth Edition); J.* Sturge et al. Ed; Van Nostrand Reinhold: New York, 1989; Chapter 9 and in *Unconventional Imaging Processes;* E. Brinckman et al, Ed; The Focal Press: London and New York: 1978; pp. 74-75.

In photothermographic elements, the reducing agent for the organic silver salt, often referred to as a "developer," may be any material, preferably any organic material, that can reduce silver ion to metallic silver. At elevated temperatures, in the presence of the latent image, the non-photosensitive reducible silver source e.g., silver behenate, is reduced by the reducing agent for silver ion. This produces a negative black-and-white image of elemental silver.

While conventional photographic developers, such as, methyl gallate, hydroquinone, substituted hydroquinones, catechol, pyrogallol, ascorbic acid, and ascorbic acid derivatives are useful, they tend to result in very reactive photothermographic formulations and fog during preparation and coating of the photothermographic element. As a result, hindered phenol reducing agents have traditionally been preferred.

A wide range of alternative reducing agents have been suggested as being effective in dry silver systems, lengthy lists of such materials being disclosed, for example, in Research Disclosure, item numbers 17029 (1978) and 29963 (1989), and in numerous patents. Such lists generally include hydroxamic acids, but the only recorded example of the actual use of hydroxamic acids as developers for dry silver is in U.S. Patent No. 3751252. This patent demonstrates that hydroxamic acids can indeed function as developers in dry silver systems, but there is no indication of unusual contrast effects. While this patent suggests that it is possible to use hydroxamic acids in combination with other reducing agents such as substituted phenols and naphthols, there is no example of such a combination and no advantage associated with such a combination.

US Patents Nos. 3933507 and 4082901 disclose imaging materials comprising a light insensitive silver salt and a reducing agent, but which do not contain light-sensitive silver salts. Hydroxamic acids and N-hydroxycarbamates are disclosed as examples of suitable reducing agents.

In photothermographic elements there exists the desire for products which exhibit increased contrast upon exposure to light and subsequent development. This desire is based upon the realization that contrast is directly related to the appearance of sharpness. Thus, products which exhibit increased contrast give the visual impression of enhanced sharpness. Furthermore, for certain applications such as graphic arts films and papers, a high contrast is an essential requirement.

The contrast of an imaging medium is defined as the slope of its D-Log E curve, and hence has different values for different exposure levels. The D-Log E curve of a typical negative-acting system shows a horizontal (Dmin) portion corresponding to low exposures, a roughly linear, upwardly sloping portion corresponding to mid-range exposures, and another horizontal (Dmax) portion corresponding to high exposures. The portion of the curve connecting the Dmin and mid-range portions is referred to as the toe region, and the portion of the curve connecting the mid-range and Dmax portions is referred to as the shoulder region. The slope of the linear mid-range portion is defined as the gamma (γ), and is the most commonly-used measure of contrast, although the toe contrast, i.e., the average gradient of the curve in the toe region, is also important. For typical dry silver media, the linear mid-range portion includes the density range 0.6+fog to 1.2+fog, and so the slope of the curve between these limits may be taken as the value of γ.

Conventional dry silver media comprising bisphenol developers, which are generally considered state-of-the-art, rarely exhibit a γ of greater than 3.0. This is well-suited to medical imaging and similar applications where continuous tone reproduction is required, but is inadequate for graphic arts applications such as phototypesetting films and papers, contact films etc., where a much higher γ e.g. 5.0 or greater, is required.

There is a continuing need for photothermographic media with improved speed and contrast.

According to the present invention there is provided a photothermographic element capable of providing an image density that exceeds background fog by at least 1.2 optical density units comprising a support bearing at least one photothermographic medium comprising:
(a) a photosensitive silver halide;
(b) a non-photosensitive, reducible silver source;
(c) a reducing agent for the non-photosensitive, reducible silver source;
(d) a toner; and
(e) a binder;
in which the reducing agent comprises a hydroxamic acid compound of formula (I) hereinafter and in which the toner comprises a mixture of phthalazine and a phthalic acid derivative.

The photothermographic elements of the invention are capable of providing stable, high density images with high photospeed; high resolution; good sharpness; and high contrast. The photothermographic elements of the invention exhibit improved speed and image contrast in comparison to similar elements in which the reducing agent system, i.e. the developer, comprises only a phenolic reducing agent.

When the photothermographic element of this invention is heat developed, preferably at a temperature of from about 80°C to 250°C for a duration of from about 1 second to about 2 minutes, in a substantially water-free condition after, or simultaneously with, imagewise exposure to light, a black silver image is obtained in the exposed areas.

As used herein, the term "emulsion layer" means a layer of a photothermographic element that contains photosensitive silver salt and silver source material. As used herein the term "photothermographic element" means a construction comprising at least one photothermographic emulsion layer and any supports, topcoat layers, blocking layers, etc.

Heating in a substantially water-free condition as used herein, means heating at a temperature of 80° to 250°C. The term "substantially water-free condition" means that the reaction system is in equilibrium with water in the air, and water for inducing or promoting the reaction is not particularly or positively supplied from the exterior to the element. Such a condition is described in T.H. James *The Theory of the Photographic Process,* Fourth Edition, page 374.

Hydroxamic acid compounds suitable for use in the invention have a nucleus of the following formula:- 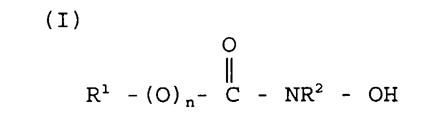 in which:
R¹ represents an alkyl group, an aromatic group, or a heterocyclic group;
R² represents H, an alkyl group, an aromatic group, or a heterocyclic group; and
n is 0 or 1.

Alkyl groups represented by R¹ and /or R² preferably possess up to 20 carbon atoms, more preferably up to 10 carbon atoms, and may be linear such as, methyl, ethyl, n-butyl etc., branched, such as, 2-propyl, t-butyl etc., or cyclic, such as, cyclohexyl, cyclopentyl etc.

Aromatic groups represented by R¹ and /or R² may possess up to 14 carbon atoms, preferably up to 10 carbon atoms, and include single-ring systems, such as phenyl, and fused-ring systems, such as, naphthyl.

Heterocyclic groups represented by R¹ and /or R² comprise aromatic or non-aromatic ring systems of up to 14 atoms, preferably up to 10 atoms, selected from C,N,O and S, such as, pyridyl, furyl, quinolinyl, thienyl, benzthiazolyl, piperidinyl etc.

Compounds of formula (I) in which n is 1 are also known as N-hydroxycarbamates, and compounds of formula (I) in which R² is other than H are also known as N-substituted hydroxamic acids and N-substituted N-hydroxycarbamates. However, all the compounds of formula (I) may be regarded as hydroxamic acid derivatives, and the term "hydroxamic acid compounds" as used herein includes all such compounds.

As is well understood in this area, substitution is not only tolerated, but is often advisable and substitution is anticipated on the compounds used in the present invention. As a means of simplifying the discussion and recitation of certain substituent groups, the terms "group" and "moiety" are used to differentiate between those chemical species that may be substituted and those which may not be so substituted. Thus, when the term "group," or "aryl group," is used to describe a substituent, that substituent includes the use of additional substituents beyond the literal definition of the basic group. Where the term "moiety" is used to describe a substituent, only the unsubstituted group is intended to be included. For example, the phrase, "alkyl group" is intended to include not only pure hydrocarbon alkyl chains,such as methyl, ethyl, propyl, *t*-butyl, cyclohexyl, *iso*-octyl, octadecyl and the like, but also alkyl chains bearing substituents known in the art, such as hydroxyl, alkoxy, phenyl, halogen atoms (F, Cl, Br, and I), cyano, nitro, amino, carboxy, etc. For example, alkyl group includes ether groups (e.g., CH₂CH₂CH₂-O-), haloalkyls, nitroalkyls, carboxyalkyls, hydroxyalkyls, sulfoalkyls, etc. On the other hand, the phrase "alkyl moiety" is limited to the inclusion of only pure hydrocarbon alkyl chains, such as methyl, ethyl, propyl, *t*-butyl, cyclohexyl, *iso*-octyl, octadecyl, and the like. Substituents that react with active ingredients, such as very strongly electrophilic or oxidizing substituents, would of course be excluded by the ordinarily skilled artisan as not being inert or harmless.

Examples of hydroxamic acid compounds suitable for use in the invention include the following:-

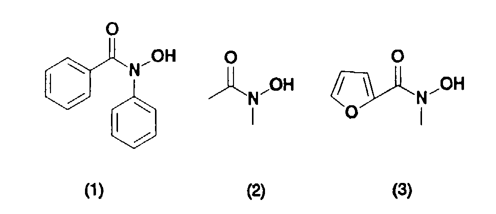

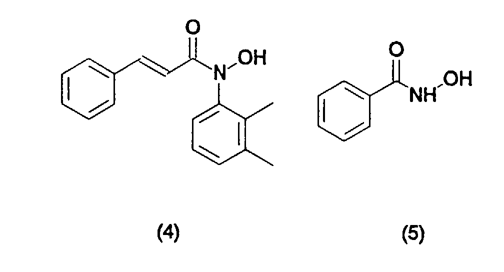

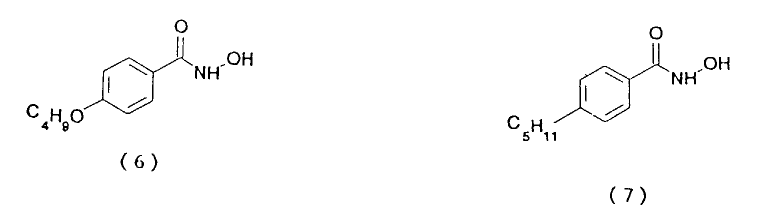

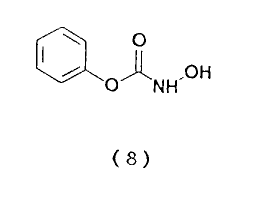

N-hydroxycarbamates (i.e. compounds of Formula I in which n = 1) have not previously been known to act as developers in photothermographic systems, far less to give high contrast images. Hydroxamic acids in accordance with Formula I in which n = O and R² = H have been disclosed in U.S. 3,751,252 as having the capability to develop dry silver, but the ability to develop high contrast images is neither disclosed in the prior art nor deducible therefrom. The imaging media and tests disclosed in U.S. 3,751,252 are rather crude. Although "high density" is claimed for images generated using hydroxamic acids as developers, this is defined as a density of about 0.8 to 1.0. Furthermore, such densities were only achieved in tests in which the developing agent was "spotted" on to the coated imaging media as a solution in organic solvents, rather than being incorporated in the photosensitive medium at the coating stage. In subsequent examples, where the developing agents were incorporated in the coating in the normal manner, the maximum density disclosed is 0.44, and the maximum image differential (Dmax - Dmin) is 0.28. With such low densities and image differentials, the concept of average contrast (γ), as herein defined, is meaningless.

When image differentials of 1.2 or more are available, the question of contrast (γ) becomes important. For certain potential applications, particularly in the graphic arts field, a high γ (>4.0) is essential, but the prior art provides no guidance as to how this might be achieved, the most commonly used phenolic developers rarely providing a γ greater than about 3.0. The ability of the hydroxamic acids and N-hydroxycarbamates to act as high contrast developers is thus highly beneficial and highly unexpected.

In the tests disclosed in US-A-3,751,252, either no toner was used or phthalazinone was used as a toner. In the present invention, a combination of phthalazine and a phthalic acid derivative is used as toner, and this is believed to play a key role in obtaining the enhanced image differentials (in comparison to the differentials disclosed in US-A-3,751,252) which are essential to the proper functioning of the invention. The use of a combination of phthalazine and a phthalic acid derivative as the toner in a photothermographic medium is disclosed in US Patents Nos. 3,994,732, and 4,123,282. These patents teach that the aforesaid combination of toning ingredients can provide an improved image tone (black as opposed to yellow) and give a similar photospeed in comparison to a phthalazinone toner. There is no disclosure of enhanced contrast or other unusual sensitometric effects.

In the context of the present invention, the term "phthalic acid derivative" includes phthalic, homophthalic and naphthalene-2,3-dicarboxylic acids and their corresponding anhydrides, as well as substituted derivatives thereof. Phthalic acid derivatives useful in the invention have a nucleus of the following formula:

R³-A-R⁴

in which A is phenyl or naphthyl, and R³ and R⁴, are substitutents on the 2 and 3 positions of A and are selected from -COOH and -CH₂COOH or together complete a cyclic anhydride group. The phenyl or naphthyl group represented by A may bear further substitutents, such as alkyl groups, alkoxy groups, halogen atoms etc. Mixtures of two or more phthalic acid derivatives may be employed. A preferred phthalic acid derivative is 4-methylphthalic acid.

Phthalazine is typically present in the photothermographic medium at a loading of from 0.1 to 30.0 grams per mol silver, preferably in the range 0.5-10.0 grams per mol silver. The phthalic acid derivative (or mixture of phthalic acid derivatives) is typically present in the photothermographic medium at a loading of from 0.1 to 30.0 grams per mol silver, preferably in the range 0.5 - 10 grams per mol silver.

The photothermographic elements of the present invention contain a reducing agent system comprising at least one hydroxamic acid compound as described above, optionally in combination with a phenolic reducing agent.

When the hydroxamic acid compounds are used in the absence of other reducing agents, the preferred compounds are those of Formula I in which R¹ represents an aromatic group and R² is H. The resulting photothermographic elements show an exceptionally high average contrast, typically greater than 5.0 and frequently greater than 10.0.

In the absence of phenolic reducing agents the amounts of the above-described hydroxamic acids that are added to the photothermographic element of the present invention may be varied depending upon the particular compound used, upon the type of emulsion layer, and whether the hydroxamic acid compound is located in an emulsion layer or topcoat layer. However, the hydroxamic acid compounds are preferably added in an amount of 0.01 to 1.0 mole per mole of silver, and more preferably, from 0.05 to 0.75 mole per mole of silver, in the emulsion layer.

Alternatively, the hydroxamic acid compounds may be used in combination with conventional phenolic reducing agents. The resulting two component reducing agent system provides a higher speed and/or contrast than is obtainable using a conventional phenolic reducing agent as the sole developing agent. The phenolic reducing agent is preferably a hindered phenol developer.

Hindered phenol developers are compounds that contain only one hydroxy group on a given phenyl ring and have at least one additional substituent located ortho to the hydroxy group. They differ from traditional photographic developers which contain two hydroxy groups on the same phenyl ring (such as is found in hydroquinones) . Hindered phenol developers may contain more than one hydroxy group as long as they are located on different phenyl rings. Hindered phenol developers include, for example, binaphthols (i.e., dihydroxy-binaphthyls), biphenols (i.e., dihydroxybiphenyls), bis(hydroxynaphthyl)methanes, bis(hydroxyphenyl)methanes, hindered phenols, and naphthols.

Examples of binaphthols include 1,1'-bi-2-naphthol; 1,1'-bi-4-methyl-2-naphthol; and 6,6'-dibromo-bi-2-naphthol. Other suitable compounds are disclosed in U.S. Patent No. 5,262,295 at column 6, lines 12 to 13.

Examples of biphenols include 2,2'-dihydroxy-3,3'-di-t-butyl 5,5-dimethylbiphenyl; 2,2'-dihydroxy-3,3',5,5'-tetra-t-butylbiphenyl; 2,2'-dihydroxy-3,3'-t-butyl-5,5'-dichlorobiphenyl; 2-(2-hydroxy-3-t-butyl-5-methylphenyl)-4-methyl-6-n-hexylphenol; 4,4'-dihydroxy-3,3',5,5'-tetra-t-butylbiphenyl; and 4,4'-dihydroxy-3,3',5,5'-tetramethylbiphenyl. Other suitable compounds are disclosed in U.S. Patent No. 5,262,295 at column 4, lines 17 to 47.

Examples of bis(hydroxynaphthyl)methanes include 2,2'-methylene-bis(1-naphthol). Other suitable compounds are disclosed in U.S. Patent No. 5,262,295 at column 6, lines 14-16.

Examples of bis(hydroxyphenyl)methanes include bis(2-hydroxy-3-t-butyl-5-methylphenyl)methane (CAO-5); 1,1-bis(2-hydroxy-3,5-dimethylphenyl)-3,5,5-trimethylhexane (PermanaxTM); 4,4'-methylenebis(2,6-di-t-butylphenol); 2,2-bis(4-hydroxy-3-methylphenyl)propane; 4,4'-ethylidenebis(2-t-butyl-6-methylphenol); and 2,2-bis (3,5-dimethyl-4-hydroxyphenyl) propane. Other suitable compounds are disclosed in U.S. Patent No. 5,262,295 at column 5 line 63 to column 6, line 8.

Examples of hindered phenols include 2,6-di-t-butylphenol; 2,6-di-t-butyl-4-methylphenol; 2,4-di-t-butylphenol; 2,6-dichlorophenol; 2,6-dimethylphenol; and 2-t-butyl-6-methylphenol.

Examples of hindered naphthols include 1-naphthol; 4-methyl-1-naphthol; 4-methoxy-1-naphthol; 4-chloro-1-naphthol; and 2-methyl-1-naphthol. Other suitable compounds are disclosed in U.S. Patent No. 5,262,295 at column 6, lines 17-20.

The reducing agent system preferably constitutes up to 20% by weight of the total solids of the photothermographic medium, more preferably from 1 to 10 % by weight of the total solids. In multilayer constructions, if the reducing agent system is added to a layer other than an emulsion layer, slightly higher proportions, of from about 2 to 15 wt%, tend to be more desirable.

The amounts of the above-described reducing agents that are added to the photothermographic element of the present invention may be varied depending upon the particular compounds used, upon the type of emulsion layer, and whether the reducing agents are located in a emulsion layer or topcoat layer. However, the phenolic reducing agent is preferably added in an amount of 0.01 to 1.0 mole per mole of silver, and more preferably from 0.05 to 0.75 mole per mole of silver in the emulsion layer. The hydroxamic acid compound is preferably added in an amount of 0.001 to 0.2 moles per mole of silver, more preferably from 0.005 to 0.1 mole per mole of silver.

In multilayer constructions, the hydroxamic acid compound and the phenolic reducing agent may be present in the same layer or in different layers, but are preferably in the same layer, and most preferably both are present in the emulsion layer.

The photothermographic elements of the present invention include a photosensitive silver halide in the photothermographic construction. The photosensitive silver halide can be any photosensitive silver halide, such as, silver bromide, silver iodide, silver chloride, silver bromoiodide, silver chlorobromoiodide, silver chlorobromide, and mixtures thereof. The photosensitive silver halide can be added to the emulsion layer in any fashion so long as it is placed in catalytic proximity to the organic silver compound which serves as a source of reducible silver.

The silver halide used in the present invention may be employed without modification. However, it can be chemically and spectrally sensitized in a manner similar to that used to sensitize conventional wet process silver halide or state-of-the-art heat-developable photographic materials. For example, it may be chemically sensitized with a chemical sensitizing agent, such as a compound containing sulfur, selenium, tellurium, etc., or a compound containing gold, platinum, palladium, ruthenium, rhodium, iridium, etc., a reducing agent such as a tin halide, etc., or a combination thereof. The details of these procedures are described in T.H. James *The Theory of the Photographic Process,* Fourth Edition, Chapter 5, pages 149 to 169. Suitable chemical sensitization procedures are also disclosed in U.S. Patent Nos. 1,623,499; 2,399,083; 3,297,447; and 3,297,446.

The silver halide may be prepared *ex situ,* that is it may be "pre-formed" and mixed with the organic silver salt in a binder prior to use to prepare a coating solution. The silver halide may be pre-formed by any means, e.g., in accordance with U.S. Patent No. 3,839,049. For example, it is effective to blend the silver halide and organic silver salt using a homogenizer for a long period of time. Materials of this type are often referred to as "pre-formed emulsions." Methods of preparing these silver halide and organic silver salts and manners of blending them are disclosed in Research Disclosure, June 1978, item 17029; U.S. Patent Nos. 3,700,458 and 4,076,539; and Japanese Patent Application Nos. 13224/74, 42529/76, and 17216/75.

Pre-formed silver halide emulsions when used in the material of this invention can be unwashed or washed to remove soluble salts. In the latter case the soluble salts can be removed by chill-setting and leaching or the emulsion can be coagulation washed, e.g., by the procedures disclosed in U.S. Patent Nos. 2,618,556; 2,614,928; 2,565,418; 3,241,969; and 2,489,341. The silver halide grains may have any crystalline habit including, but not limited to, cubic, tetrahedral, orthorhombic, tabular, laminar, platelet, etc.

The silver halide grains may have a uniform ratio of halide throughout; they may have a graded halide content, with a continuously varying ratio of, for example, silver bromide and silver iodide; or they may be of the core-shell-type, having a discrete core of one halide ratio, and a discrete shell of another halide ratio. Core-shell type silver halide grains useful in photothermographic elements and methods of preparing these materials are disclosed in allowed copending U.S. Patent Application Serial Number 08/199,114 (filed February 22, 1994). A core-shell silver halide grain having an iridium doped core is particularly preferred. Iridium doped core-shell grains of this type are disclosed in copending U.S. Patent Application Serial Number 08/239,984 (filed May 9, 1994).

It is also effective to use an *in situ* process, i.e., a process in which a halogen-containing compound is added to an organic silver salt to partially convert the silver of the organic silver salt to silver halide. *In situ* halidisation can be carried out in addition to mixing with a preformed silver halide, and this is preferred.

The light sensitive silver halide used in the present invention can be employed in a range of about 0.005 mole to 0.5 mole, preferably from 0.01 mole to 0.15 mole, and more preferably from 0.03 to 0.12 mole per mole of non- photosensitive reducible silver salt.

The photosensitive silver halides may be spectrally sensitized with various known dyes that spectrally sensitize silver halide. Examples of sensitizing dyes that can be employed include cyanine dyes, merocyanine dyes, complex cyanine dyes, complex merocyanine dyes, holopolar cyanine dyes, hemicyanine dyes, styryl dyes, and hemioxonol dyes. Of these dyes, cyanine dyes, merocyanine dyes, and complex merocyanine dyes are particularly useful. For sensitisation to the infrared, a particularly suitable class of dyes are disclosed in U.S. Patent No. 5,393,654. The amount of sensitizing dye added is generally about 10⁻¹⁰ to 10⁻¹ mole, and preferably 10⁻⁸ to 10⁻³ moles per mole of silver halide.

To enhance the speed of the photothermographic elements of the invention, it is often desirable to add supersensitisers. Any supersensitiser which increases the sensitivity may be used. Preferred infrared supersensitisers are disclosed in U.S. Patent Application Serial No. 07/846,919 and include heteroaromatic mercapto compounds and heteroaromatic disulphide compounds of the formulae:

Ar-S-M and Ar-S-S-Ar

in which M represents H or an alkali metal atom, and Ar represents an aromatic ring (including fused aromatic rings) containing one or more atoms selected from N, S, O, Se and Te. Preferably the heteroaromatic ring is benzimidazole, naphthimidazole, benzothiazole, naphthothiazole, benzoxazole, naphthoxazole, benzoselenazole, benzotellurazole, imidazole, oxazole, pyrazole, triazole, thiadiazole, tetrazole, triazine, pyrimidine, pyridazine, pyrazine, pyridine, purine, quinoline or quinazolinone. However, other heteroaromatic rings may be employed.

The heteroaromatic ring may also carry substituents. Preferred substituents are selected from halogen (such as Br and Cl), hydroxy, amino, carboxy, alkyl (preferably of 1 to 4 carbon atoms) and alkoxy (preferably of 1 to 4 carbon atoms).

Preferred supersensitisers are 2-mercaptobenzimidazole, 2-mercapto-5-methylbenzimidazole, 2-mercaptobenzothiazole and 2-mercaptobenzoxazole.

The supersensitisers are generally used in an amount of at least 0.001 moles per mole of silver in the emulsion layer, usually the range from 0.001 to 1.0 moles of the compound per mole of silver, and preferably from 0.01 to 0.3 moles of compound per mole of silver.

The photothermographic elements of the present invention include a non-photosensitive reducible silver source. The non-photo-sensitive reducible silver source that can be used in the present invention can be any material that contains a source of reducible silver ions. Preferably, it is a silver salt which is comparatively stable to light and forms a silver image when heated to 80°C or higher in the presence of an exposed photocatalyst (such as silver halide) and a reducing agent. Salts of organic acids, such as the silver salt of behenic acid, or other salts of organic materials, such as silver imidazolates, have been proposed, and U.S. Patent No. 4,260,677 discloses the use of complexes of inorganic or organic silver salts as non-photosensitive, reducible silver sources. Complexes of organic or inorganic silver salts, wherein the ligand has a gross stability constant for silver ion of about 4.0 to 10.0, are also useful in this invention.

Silver salts of organic acids, particularly silver salts of long chain fatty carboxylic acids, are preferred. The chains typically contain 10 to 30, preferably 15 to 28, carbon atoms. Suitable organic silver salts include silver salts of organic compounds having a carboxyl group. Examples thereof include a silver salt of an aliphatic carboxylic acid and a silver salt of an aromatic carboxylic acid. Preferred examples of the silver salts of aliphatic carboxylic acids include silver behenate, silver stearate, silver oleate, silver laurate, silver caprate, silver myristate, silver palmitate, silver maleate, silver fumarate, silver tartarate, silver furoate, silver linoleate, silver butyrate, silver camphorate, and mixtures thereof, etc. Silver salts that can be substituted with a halogen atom or a hydroxyl group also can be effectively used. Preferred examples of the silver salts of aromatic carboxylic acid and other carboxyl group-containing compounds include: silver benzoate, a silver-substituted benzoate, such as silver 3,5-dihydroxybenzoate, silver *o*-methylbenzoate, silver m-methylbenzoate, silver p-methylbenzoate, silver 2,4-dichlorobenzoate, silver acetamidobenzoate, silver *p*-phenylbenzoate, etc.; silver gallate; silver tannate; silver phthalate; silver terephthalate; silver salicylate; silver phenylacetate; silver pyromelliate; a silver salt of 3-carboxymethyl-4-methyl-4-thiazoline-2-thione or the like as disclosed in U.S. Patent No. 3,785,830; and a silver salt of an aliphatic carboxylic acid containing a thioether group as disclosed in U.S. Patent No. 3,330,663.

Silver salts of compounds containing mercapto or thione groups and derivatives thereof can also be used. Preferred examples of these compounds include: a silver salt of 3-mercapto-4-phenyl-1,2,4-triazole; a silver salt of 2-mercaptobenzimidazole; a silver salt of 2-mercapto-5-aminothiadiazole; a silver salt of 2-(2-ethylglycolamido)-benzothiazole; a silver salt of thioglycolic acid, such as a silver salt of a S-alkylthioglycolic acid wherein the alkyl group has from 12 to 22 carbon atoms; a silver salt of a dithiocarboxylic acid such as a silver salt of dithioacetic acid; a silver salt of thioamide; a silver salt of 5-carboxylic-l-methyl-2-phenyl-4- thiopyridine; a silver salt of mercaptotriazine; a silver salt of 2-mercapto-benzoxazole; a silver salt as described in U.S. Patent No. 4,123,274, for example, a silver salt of a 1,2,4-mercaptothiazole derivative, such as a silver salt of 3-amino-5-benzylthio-1,2,4-thiazole; and a silver salt of a thione compound, such as a silver salt of 3-(2-carboxyethyl) -4-methyl-4-thiazoline-2-thione as disclosed in U.S. Patent No. 3,201,678. Silver salts of acetylenes can also be used. Silver acetylides are disclosed in U.S. Patent Nos. 4,761,361 and 4,775,613.

Furthermore, a silver salt of a compound containing an imino group can be used. Preferred examples of these compounds include: silver salts of benzotriazole and substituted derivatives thereof, for example silver methylbenzotriazole and silver 5-chlorobenzotriazole, etc.; silver salts of 1,2,4-triazoles or 1-H-tetrazoles as disclosed in U.S. Patent No. 4,220,709; and silver salts of imidazoles and imidazole derivatives.

It is also found convenient to use silver half soaps. A preferred example of a silver half soap is an equimolar blend of silver behenate and behenic acid, which analyzes for about 14.5% silver and which is prepared by precipitation from an aqueous solution of the sodium salt of commercial behenic acid. Transparent sheet materials made on transparent film backing require a transparent coating. For this purpose a silver behenate full soap, containing not more than about 4 or 5 % of free behenic acid and analyzing about 25.2 % silver, can be used.

The method used for making silver soap emulsions is well known in the art and is disclosed in *Research Disclosure,* April 1983, item 22812, *Research Disclosure,* October 1983, item 23419, and U.S. Patent No. 3,985,565.

The silver halide and the non-photosensitive reducible silver source material that form a starting point of development should be in catalytic proximity, i.e., reactive association. By "catalytic proximity" or "reactive association" is meant that they should be in the same layer, in adjacent layers, or in layers separated from each other by an intermediate layer having a thickness of less than 1 micrometer (1 µm). It is preferred that the silver halide and the non-photosensitive reducible silver source material be present in the same layer.

The source of reducible silver material generally constitutes about 5 to 70% by weight of the emulsion layer. It is preferably present at a level of from 10 to 50% by weight of the emulsion layer.

The photosensitive silver halide, the non-photosensitive reducible source of silver, the reducing agent, and other addenda used in the present invention are dissolved or dispersed in at least one binder.

The binder(s) that can be used in the present invention can be employed individually or in combination with one another. It is preferred that the binder be selected from polymeric materials, such as, for example, natural and synthetic resins that are sufficiently polar to hold the other ingredients in solution or suspension.

A typical hydrophilic binder is a transparent or translucent hydrophilic colloid. Examples of hydrophilic binders include: a natural substance, for example, a protein, such as gelatin, a gelatin derivative, a cellulose derivative, etc.; a polysaccharide, such as starch, gum arabic, pullulan, dextran, etc.; and a synthetic polymer, for example, a water-soluble polyvinyl compound such as polyvinyl alcohol, polyvinyl pyrrolidone, acrylamide polymer, etc. Another example of a hydrophilic binder is a dispersed vinyl compound in latex form which is used for the purpose of increasing dimensional stability of a photographic element.

Examples of typical hydrophobic binders are polyvinyl acetals, polyvinyl chloride, polyvinyl acetate, cellulose acetate, polyolefins, polyesters, polystyrene, polyacrylonitrile, polycarbonates, methacrylate copolymers, maleic anhydride ester copolymers, butadiene-styrene copolymers, and the like. Copolymers, e.g., terpolymers, are also included in the definition of polymers. The polyvinyl acetals, such as polyvinyl butyral and polyvinyl formal, and vinyl copolymers such as polyvinyl acetate and polyvinyl chloride are particularly preferred.

Although the binder can be hydrophilic or hydrophobic, preferably it is hydrophobic in the silver containing layer. Optionally, these polymers may be used in combination of two or more thereof.

The binders are preferably used at a level of about 30 to 90% by weight of the emulsion layer, and more preferably at a level of from 45 to 85% by weight. Where the proportions and activities of the reducing agent for the non-photosensitive reducible source of silver require a particular developing time and temperature, the binder should be able to withstand those conditions. Generally, it is preferred that the binder not decompose or lose its structural integrity at 250°F (121°C) for 60 seconds, and more preferred that it not decompose or lose its structural integrity at 350°F (177°C) for 60 seconds.

The polymer binder is used in an amount sufficient to carry the components dispersed therein, that is, within the effective range of the action as the binder. The effective range can be appropriately determined by one skilled in the art.

In the photothermographic elements of the invention, a variety of other ingredients well known in the art of photothermographic imaging, such as shelf-life stabilizers, development accelerators, post-processing stabilizers or stabilizer precursors, and other image-modifying agents, may be present in the emulsion layer and/or layer(s) adjacent thereto.

The photothermographic elements of the invention may contain antifoggants and/or stabilisers to minimise loss of sensitivity during keeping, and to minimise build up of background fog before, during and after exposure and development. In particular, it is highly desirable that the photothermographic elements comprise one or more antifoggants which inhibit the unwanted thermal reduction of the silver salt to silver metal in non-light-struck areas, but do not prevent reduction from taking place in light-struck areas. In this way, the build up of background fog, especially during thermal processing, may be minimised. It is believed that this plays a major role in the generation of good image differentials.

Mercury (II) salts are well known antifoggants as disclosed in US-A-3589903. Preferred mercury (II) salts for this purpose are mercuric acetate and mercuric bromide. As an alternative to mercuric salts, a variety of organic compounds may be used as antifoggants, notably polyhalogenated compounds such as tribromomethyl- and tribromomethylsulphonyl-substituted heterocycles. Preferred non-mercury antifoggants include compounds comprising an aryl or heteroaryl ring system, such as phenyl, quinoline, isoquinoline, benzthiazole, thiadiazole, or pyrimidine, substituted with tribromomethyl, tribromoacyl or tribromomethyl-sulphonyl as disclosed, for example, in U.S. Patents Nos. 4,123,282; 4,756,999; 5,340,712 and 5,374,514, and in European Patent Publications Nos. 631,176 and 600,587.

When preformed silver halide is used in the preparation of the photothermographic media, said silver halide may, of course, contain any of the antifoggants and stabilisers that are conventionally added to wet-processed silver halide emulsions.

Photothermographic elements of the invention may contain plasticizers and lubricants such as polyalcohols, e.g., glycerin and diols of the type disclosed in U.S. Patent No. 2,960,404; fatty acids or esters such as those disclosed in U.S. Patent Nos. 2,588,765 and 3,121,060; and silicone resins such as those disclosed in British Patent No. 955,061.

Photothermographic elements according to the present invention can further contain light-absorbing materials, antihalation, acutance, and filter dyes such as those disclosed in U.S. Patent Nos. 4,581,323; 4,581,325; 5,135,842; 5,266,452; 5,314,795; and 5,380,635, and in European Patent No. 377,961.

Photothermographic elements containing emulsion layers of the invention may contain matting agents, such as, starch, titanium dioxide, zinc oxide, silica, and polymeric beads including beads of the type disclosed in U.S. Patent Nos. 2,992,101 and 2,701,245.

Photothermographic elements in accordance with this invention may contain antistatic or conducting layers, such as, layers that comprise soluble salts, e.g., chlorides, nitrates, etc., evaporated metal layers, ionic polymers such as those disclosed in U.S. Patent Nos. 2,861,056, and 3,206,312 or insoluble inorganic salts such as those disclosed in U.S. Patent No. 3,428,451.

The formulations for the emulsion layer(s) can also include coating aids such as fluoroaliphatic polyesters.

The photothermographic elements of this invention may comprise one or more layers on a substrate. Single layer constructions should contain the silver halide, the non-reducible silver source material, the reducing agent i.e., the developer, the toner and binder as well as optional materials such as antifoggants, coating aids, and other adjuvants. Two-layer constructions preferably contain silver halide and non-photosensitive reducible silver source in one emulsion layer (usually the layer adjacent to the substrate) and the other ingredients either in the second layer or distributed between both layers. However, two layer constructions in which a single emulsion layer containing all the active ingredients is protected by a binder-only topcoat are also possible. A preferred construction comprises a first layer (nearest the substrate) containing binder, photosensitive silver halide, non-photosensitive reducible silver salt, reducing agent system and antifoggant, and a second (outer) layer comprising binder and toner.

The formulation for a photothermographic emulsion layer can be prepared by dissolving and dispersing the binder, the photosensitive silver halide (when added as a preformed ingredient), the non-photo-sensitive reducible source of silver, the reducing agent system for the non-photosensitive reducible silver source, the toner and optional additives in an inert organic solvent, such as, for example, toluene, 2-butanone, or tetrahydrofuran. Optionally, the formulation may be spray-dried or encapsulated to produce solid particles, which can then be redispersed in a second, possibly different, binder and then coated onto the support.

Photothermographic emulsions used in this invention can be coated by various coating procedures including wire wound rod coating, dip coating, air knife coating, curtain coating, or extrusion coating using hoppers of the type disclosed in U.S. Patent No. 2,681,294. If desired, two or more layers may be coated simultaneously by the procedures disclosed in U.S. Patent No. 2,761,791 and British Patent No. 837,095, but the more usual procedure is to coat multiple layers in multiple passes through the coater, with a lower layer being allowed to dry before application of an upper layer. Alternatively, an upper layer may be added by transfer from a separate, temporary substrate in a lamination process.

Typical wet thicknesses of emulsion layers can range from about 10 to 100 micrometers (µm), and the layers can be dried in forced air at temperatures ranging from 20°C to 100°C. The thickness of the silver-containing layer (and hence the coating weight of silver) may be varied depending on the maximum image density required, but the silver coating weight must be consistent with a developed maximum image density of at least 1.2, measured in reflection mode.

Photothermographic emulsions used in the invention can be coated on a wide variety of supports. The support or substrate can be selected from a wide range of materials depending on the imaging requirement. Substrates may be transparent or opaque. Typical supports include polyester film, subbed polyester film, polyethylene terephthalate film, cellulose nitrate film, cellulose ester film, polyvinylacetal film, polycarbonate film and related or resinous materials, as well as glass, paper, metal and the like. Typically, a flexible support is employed, especially a paper support, which can be partially acetylated or coated with baryta and/or an α-olefin polymer, particularly a polymer of an α-olefin containing 2 to 10 carbon atoms such as polyethylene, polypropylene, ethylene-butene copolymers, and the like. Preferred polymeric materials for the support include polymers having good heat stability, such as polyesters. A particularly preferred polyester is polyethylene terephthalate.

Additionally, it may be desirable in some instances to coat different emulsion layers on both sides of a transparent substrate, especially when it is desirable to isolate the imaging chemistries of the different emulsion layers. Antihalation layers are frequently coated on the opposite side of a transparent substrate from the photosensitive layer(s).

Barrier layers, preferably comprising a polymeric material, may also be present in the photothermographic element of the present invention. Polymers for the material of the barrier layer can be selected from natural and synthetic polymers, such as gelatin, polyvinyl alcohols, polyacrylic acids, sulfonated polystyrene, and the like. The polymers can optionally be blended with barrier aids such as silica.

The photothermographic elements of this invention may be used to prepare black-and-white images. The photothermographic material of this invention can be used, for example, in conventional black-and-white photothermography, in electronically generated black-and-white hardcopy recording, in the graphic arts area, and in digital proofing. The material of this invention provides high photospeed, provides strongly absorbing black-and-white images, and provides a dry and rapid process.

The photothermographic elements of the invention may be image-wise exposed by means of any of the conventional white light sources such as tungsten bulbs, metal halide lamps, xenon arc lamps etc., and (if sensitised to the appropriate wavelengths) by means of lasers such as He-Ne lasers and diode lasers. Graphic arts scanners, employing laser diodes emitting in the 750 to 850 nm region, are particularly suitable.

The latent image formed by light-exposure of the photothermographic construction can be developed by heating the material at a moderately elevated temperature of, for example, about 80°C to 250°C, preferably from 120°C to 200°C, for a sufficient period of time, generally from 1 second to 2 minutes. Heating may be carried out by the typical heating means such as a hot plate, an iron, a hot roller, a heated fluid, or the like.

The invention will now be illustrated by the following Examples:

All materials used in the following Examples were readily available from standard commercial sources, such as Aldrich Chemical Co. (Milwaukee, WI), unless otherwise specified. All percentages are by weight unless otherwise indicated. The following terms and materials were used.

Butvar B-76™ is a polyvinyl butyral resin available from Monsanto Company, St. Louis, MO.

MEK is methyl ethyl ketone (2-butanone).

Nonox™ is 1,1-bis(2-hydroxy-3,5-dimethylphenyl)-3,5,5-trimethyl-hexane [CAS RN=7292-14-0] and is available from St. Jean Photochemicals Inc in Quebec. It is also known as Permanax™ WSO. It is a reducing agent (i.e., a developer) for the non-photosensitive reducible source of silver.

PET is poly(ethylene terephthalate).

Sensitizing Dye A is disclosed in U.S. Patent No. 5,393,654 and has the following structure. 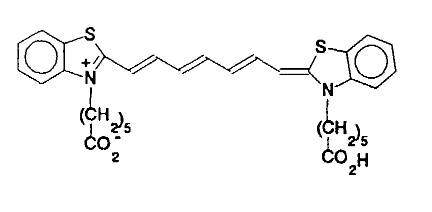 Antifoggant A is disclosed in EP0631176 and has the following structure shown below.

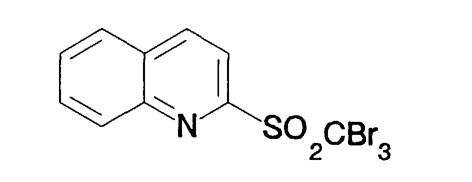

### Preparation of Compound (2)

N-methylhydroxylamine hydrochloride (40.4g, 0.48 mole) dissolved in methanol (100ml) was added at 0°C under an argon atmosphere to a 25% w/w solution of sodium methoxide in methanol (250ml, 1.1mole). To 175ml of the resulting mixture was added anhydrous ethyl acetate (11.7ml, 0.12 mole), and the mixture was stirred under argon. When ethyl acetate could no longer be detected by infrared spectroscopy, the bulk of the solvent was evaporated, the residue diluted with dichloromethane and acidified to pH 4 with dilute HCl. After two extractions with dichloromethane, the mixture was extracted continuously, first with dichloromethane and then with chloroform, until no further product could be detected in the extracting mixture. The combined extracts were dried and evaporated, then the residue distilled using a Kugelrohr apparatus at 0.15mbar pressure with an oven temperature of 120 - 150°C. After discarding the fraction distilling at oven temperatures below 120°C, there was obtained 10.19g of the desired product as an oil.

### Preparation of Compound (6)

Hydroxylamine hydrochloride (6.95g, 100 mmol) was dissolved in methanol (20ml) under argon, then added to a 25% solution of sodium methoxide in methanol (52.9 ml, 231 mmol) under argon with ice cooling. A solution of methyl 4-butoxybenzoate (10.0g, 48.0 mmol) in methanol (50 ml) was added and the mixture stirred for 3 weeks at ambient temperature under argon. After acidification to pH 6 with conc. HCl, the mixture was filtered, the filtrate evaporated, and the resulting solid extracted with chloroform. Evaporation of the dried extracts gave the product, mp 152.6 - 152.9°C after crystallisation from ethanol.

### Preparation of Compound (7)

Compound (7) was prepared by a similar route, starting from methyl 4-pentylbenzoate.

### Preparation of Compound (8)

Phenyl chloroformate (10.0g, 63.8 mmol) in ether (10 ml) was added dropwise to a stirred mixture of finely ground hydroxylamine hydrochloride 4.43g, 63.8 mmol) and potassium carbonate (8.07g, 58.4 mmol) in ether (10 ml) containing water (1 ml) at 0°C. The mixture was stirred at room temperature for three days, filtered, and the filtrate evaporated to give phenyl N-hydroxycarbamate as crystals; melting point 99.5 - 100.7°C.

### Example 1

This Example demonstrates the beneficial effects of N-substituted hydroxamic acid compounds (Compounds 1 - 4) when used in conjunction with a conventional hindered phenol developer (Nonox).

A silver behenate full soap comprising 5% by weight of a preformed gelatin silver halide emulsion was prepared by standard methods. The silver halide emulsion comprised AgBr and AgI in the molar ratio 98:2 in the form of cubic grains of average size 0.05µm. The dry, powdered soap (222g) was soaked overnight in a mixture of MEK (1240 ml), toluene (338 ml) and Butvar B-76 (20g), then stirred and passed through a homogeniser at 8000 psi.

To aliquots (200g) of the resulting homogenate, the following additions were made, with stirring and storage as indicated, all operations being carried out at room temperature under appropriate safelight conditions:-

| | |
|---|---|
| Butvar B-76 | 30.5g(stir 20 min.) |
| pyridinium hydrobromide perbromide | 0.18g (in 3 ml methanol) (stir 120 min.) |
| calcium bromide (10% in methanol) | 1.3 ml(stir 30 min.; store overnight) |
| 2-(4-chlorobenzoyl) benzoic acid | 10.0 ml(12% soln. in methanol) (stir 15 min.) |
| Sensitising Dye A | 0.0168g |
| 2-mercaptobenzimidazole | 12.0 ml(1% soln. in methanol) (stir 15 min.) |
| Nonox™ | 6.4g |
| Antifoggant A | 0.9g (stir 15 min.) |
| test compound | - identity and quantity as shown below |

Further MEK was added to bring the total mass to 300g before knife-coating the mixture at 178 µm wet thickness on to white vesicular PET base and drying for 4 min. at 70°C.

A topcoat formulation was prepared by mixing the following ingredients with ultrasonic treatment to achieve homogeneous solution:-

| | |
|---|---|
| acetone | 140 ml |
| MEK | 67 ml |
| methanol | 27.5 ml |
| cellulose acetate | 9.0g |
| phthalazine | 1.0g |
| 4-methylphthalic acid | 0.7g |
| tetrachlorophthalic acid | 0.6g |
| tetrachlorophthalic anhydride | 0.65g |

The topcoat was knife-coated at 100 µm wet thickness on top of the soap layer and dried for a further 4 min. at 70°C.

Samples of the resulting films were exposed for 10 seconds to a tungsten source through a neutral density filter and a 0 to 4 continuous density wedge, so that maximum exposure was a total of 108 lux across the spectrum. Development was for 4 or 8 seconds at 127°C using a heated roller device.

Sensitometric curves were plotted using a reflection densitometer, and from these the data reported in the following Table 1 were obtained. In the Table 1:
"Sp-1" is a measure of speed, defined as 4 minus the relative log (exposure) required to give a density of 0.2 above Dmin;
"Con 1" is a measure of contrast, defined as the slope of the curve between densities 0.3 and 0.9 above Dmin; and
"Con 2" is a measure of contrast defined as the slope of the curve between densities 0.6 and 1.2 above Dmin.

**Table 1**

| **Compound** | **Quantity (g)** | **Dev.Time (sec)** | **Dmin** | **Dmax** | **Con-1** | **Con-2** | **Sp-1** |
|---|---|---|---|---|---|---|---|
| 1 | none | 4 | 0.09 | 0.67 | 0.34 | - | 1.70 |
| 1 | 0.1 | 4 | 0.09 | 0.72 | 0.32 | - | 1.77 |
| 1 | 0.5 | 4 | 0.08 | 0.87 | 0.30 | - | 1.89 |
| 1 | 1.0 | 4 | 0.08 | 0.79 | 0.30 | - | 1.87 |
| | | | | | | | |
| 1 | none | 8 | 0.10 | 1.75 | 1.54 | 1.95 | 1.98 |
| 1 | 0.1 | 8 | 0.12 | 1.74 | 1.77 | 2.17 | 2.15 |
| 1 | 0.5 | 8 | 0.14 | 1.75 | 2.09 | 1.89 | 2.20 |
| 1 | 1.0 | 8 | 0.16 | 1.72 | 2.25 | 2.02 | 2.25 |
| | | | | | | | |
| 2 | none | 4 | 0.09 | 0.67 | 0.34 | - | 1.70 |
| 2 | 0.1 | 4 | 0.07 | 0.66 | 0.33 | - | 1.69 |
| 2 | 0.5 | 4 | 0.10 | 1.34 | 1.06 | 0.36 | 2.12 |
| 2 | 1.0 | 4 | 0.15 | 1.47 | 1.06 | 0.82 | 2.22 |
| | | | | | | | |
| 2 | none | 8 | 0.10 | 1.75 | 1.54 | 1.95 | 1.98 |
| 2 | 0.1 | 8 | 0.11 | 1.73 | 1.83 | 2.34 | 2.21 |
| 2 | 0.5 | 8 | 0.26 | 1.68 | 1.83 | 2.25 | 2.43 |
| 2 | 1.0 | 8 | 0.38 | 1.71 | 2.09 | 1.95 | 2.35 |
| | | | | | | | |
| 3 * | none | 8 | 0.17 | 1.56 | 1.56 | 0.62 | 2.52 |
| 3 | 0.1 | 8 | 0.19 | 1.71 | 1.69 | 1.28 | 2.71 |
| 3 | 0.2 | 8 | 0.18 | 1.78 | 2.25 | 2.66 | 2.80 |
| 4 | 0.1 | 8 | 0.19 | 1.36 | 1.31 | - | 2.64 |
| 4 | 0.2 | 8 | 0.21 | 1.46 | 1.40 | 1.06 | 2.67 |

| | | | | | | | |
|---|---|---|---|---|---|---|---|
| * - this set of results was obtained using a different batch of soap. | | | | | | | |

The results clearly show that all the test compounds provided an increase in speed at one or more levels of incorporation, and in many cases a useful increase in contrast was also obtained.

### Example 2

This Example demonstrates the beneficial effect of an N-unsubstituted hydroxamic acid (Compound 5) when used as a co-developer in conjunction with a conventional hindered phenol developer (Nonox).

Formulation and sample preparation were carried out as in the Example, except that varying quantities of Nonox and Compound 5 were added after the addition of Antifoggant A, and the coatings were made on transparent polyester base rather than white vesicular base. Exposure was carried out as before, and development was for 8 seconds at 127°C, but slightly different sensitometric parameters were measured because of the different base and reported in Table 2:
Sp-1 being defined as 4 minus the relative log(exposure) required to give a density of 0.1 above Dmin, and
"contrast" being defined as the slope between densities 0.1 and 2.5 above Dmin.

**Table 2**

| Nonox (g) | Cpd. 5 (g) | Dmin | Dmax | Sp-1 | Contrast |
|---|---|---|---|---|---|
| 4.4 | none | 0.16 | 0.62 | 0.89 | - |
| 4.4 | 0.1 | 0.18 | 3.58 | 1.39 | 3.73 |
| 4.4 | 0.2 | 0.20 | 2.52 | 1.29 | - |
| 4.4 | 0.4 | 0.19 | 2.92 | 1.36 | 4.50 |
| 5.4 | none | 0.15 | 1.16 | 1.07 | - |
| 5.4 | 0.1 | 0.17 | 2.73 | 1.30 | 3.34 |
| 5.4 | 0.2 | 0.23 | 3.14 | 1.50 | 3.08 |
| 5.4 | 0.4 | 0.23 | 3.13 | 1.39 | 3.31 |
| 6.4 | none | 0.16 | 1.77 | 1.15 | - |
| 6.4 | 0.1 | 0.23 | 4.01 | 1.48 | 5.24 |
| 6.4 | 0.2 | 0.19 | 3.69 | 1.52 | 3.51 |
| 6.4 | 0.4 | 0.19 | 3.67 | 1.37 | 4.68 |
| 7.4 | none | 0.15 | 2.65 | 1.14 | 2.81 |
| 7.4 | 0.1 | 0.16 | 3.15 | 1.34 | 5.09 |
| 7.4 | 0.2 | 0.20 | 3.83 | 1.46 | 4.23 |
| 7.4 | 0.4 | 0.33 | 3.96 | 1.64 | 3.73 |

The inclusion of Compound 5 clearly provided dramatic increases in both speed and contrast.

### Example 3

This Example demonstrates the use of N-unsubstituted hydroxamic acids (compounds 5 to 8) as the sole developing agent. Photothermographic elements were prepared as described in Example 1, except that the developing agent added to the emulsion layer was either Nonox™ (6.8g) or one of compounds 5 to 8 in the quantity recorded in Table 3 below. The elements were exposed as described in Example 1 and developed for 4 seconds at 127°C. Sensitometric analysis was performed as in Example 1 and the data reported set out in Table 3.

**Table 3**

| Developer (quantity in g) | Dmin | Dmax | Sp-1 | Con 1 | Con 2 |
|---|---|---|---|---|---|
| Nonox (6.4) | 0.22 | 1.77 | 2.06 | 2.54 | 2.54 |
| Cpd.5 (1.5) | 0.22 | 2.04 | 1.77 | 3.08 | 11.70 |
| Cpd.6 (2.0) | 0.53 | 2.08 | 2.59 | 5.32 | 5.32 |
| Cpd.7 (2.5) | 0.25 | 2.15 | 2.24 | 5.32 | 9.75 |
| Cpd.8 (2.5) | 0.28 | 2.05 | 2.74 | 2.66 | 5.85 |

Compared to a typical developer of the prior art (Nonox), compounds 5 to 8 used in the invention provided an increase in Dmax and a dramatic increase in contrast. Furthermore, they were effective at much lower coating weights. (The quantities listed represent crude optimisations for the compounds 5 to 8. When significantly greater quantities were added (e.g. 5.0g) there was a tendency for fogging. Lower quantities tended to give a lower Dmax, as would be expected.)

Similar tests were performed using alkyl analogues of the compounds 5 to 8, such as acetohydroxamic acid and benzyl N-hydroxycarbamate. Although effective as developers, such compounds showed no particular advantage over Nonox.

### Example 4 (Comparative)

This Example reproduces the photothermographic media disclosed in the Examples of U.S. Patent No. 3,751,252.

A mixture of silver behenate (42g), behenic acid (32g), Butvar B-76 (15g), acetone (250 ml) and toluene (250 ml) was ball milled for 18 hours, giving 418g of half-soap dispersion. To 209g of the dispersion was added 37.5 ml of a 1% by weight solution of lithium bromide in acetone, and the mixture stirred 18 hours. To aliquots (20g) of the resulting *in situ* halidised half-soap was added Compound 1 (0.055g) with and without phthalazinone (0.058g), and the formulations were coated at 125 µm wet thickness and dried 3 min at 70°C.

Samples were exposed sensitometrically as in Example 1 and developed for 10 seconds at 115°C using a hot plate. The coating without phthalazinone gave practically no image (Dmax 0.17, Dmin 0.11), while the coating that included the phthalazinone toner gave yellow-brown image of Dmax 0.64 and Dmin 0.12. No meaningful contrast measurements could be made.

In further tests, the remainder of the half soap dispersion was halidised using calcium bromide and pyridinium hydrobromide perbromide (PHP) in an analogous manner to the halidisation of the soap used in Examples 1 to 3. Thus, to the remaining dispersion was added Butvar B-76 (15g), PHP (0.09g) and 10% w/w CaBr₂ in methanol (6ml), all with stirring at 20°C. Aliquots (20g) were mixed with Nonox™ (0.6g) with and without additional toning ingredients, then coated and tested as described above. No useful images were obtained except in the case of a sample that comprised a mixture of phthalazine (0.1g) and 4-methylphthalic acid (0.07g) as toner, which gave a Dmax of 1.58 and a Dmin of 0.15.

From these results, it was concluded that the silver behenate half soap disclosed in US-A-3,751,252 was capable of providing a good image differential (>1.2), but only in the presence of a toner comprising phthalazine and a phthalic acid derivative.

## Claims

1. A photothermographic element capable of providing an image density that exceeds background fog by at least 1.2 optical density units comprising a support bearing at least one photothermographic medium comprising:
(a) a photosensitive silver halide;
(b) a non-photosensitive, reducible silver source;
(c) a reducing agent for the non-photosensitive, reducible silver source;
(d) a toner; and
(e) a binder;
in which the toner comprises a mixture of phthalazine and a phthalic acid derivative and the reducing agent comprises a hydroxamic acid compound having a nucleus of the general formula: 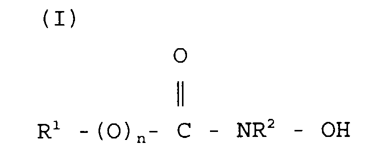 in which:
R¹ represents an alkyl group, an aromatic group, or a heterocyclic group;
R² represents H, an alkyl group, an aromatic group, or a heterocyclic group; and
n is 0 or 1.

2. A photothermographic element as claimed in Claim 1 in which R¹ and/or R² are selected from linear, branched and cyclic alkyl groups containing up to 20 carbon atoms, phenyl, naphthyl, pyridyl, furyl, quinolinyl, thienyl, benzthiazolyl and piperidinyl.

3. A photothermographic element as claimed in any preceding Claim in which the hydroxamic acid compound is selected from:

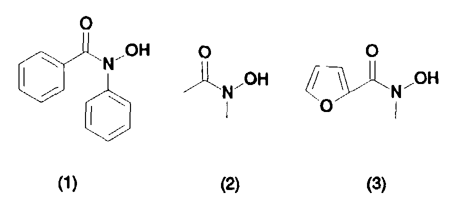

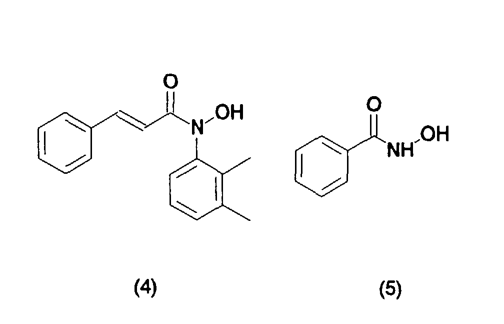

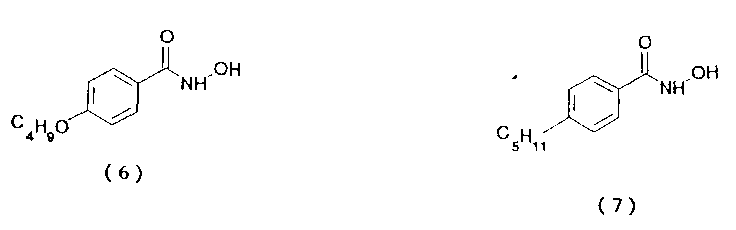

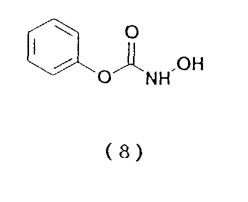

4. A photothermographic element as claimed in any preceding Claim in which the phthalic acid derivative has a nucleus of the following formula:
R³-A-R⁴
in which:
A is a phenyl or naphthyl ring, and
R³ and R⁴ are substituents on the 2 and 3 positions of A and are selected from -COOH and -CH₂COOH or together complete a cyclic anhydride group.

5. A photothermographic element as claimed in any preceding Claim in which the phthalic acid derivative is 4-methylphthalic acid.

6. A photothermographic element as claimed in any preceding Claim in which the hydroxamic acid compound is present in an amount of from 0.001 to 0.2 moles per mol of silver in the emulsion layer, the phthalazine is present in an amount of from 0.1 to 30 grams per mol of silver in the emulsion layer and the phthalic acid derivative is present in an amount of from 0.1 to 30 grams per mol of silver in the emulsion layer.

7. A photothermographic element as claimed in any preceding Claim in which the medium further comprises a phenolic reducing agent.

8. A photothermographic element according to Claim 7 in which the phenolic reducing agent is a hindered phenol developer selected from binaphthols, biphenols, bis(hydroxynaphthyl) methanes, bis(hydroxyphenyl)methanes and naphthols.

9. A photothermographic element as claimed in Claim 8 in which the hindered phenol developer is selected from 2,2'-dihydroxy-3,3'-di-t-butyl-5,5'-dimethylbiphenyl; 2,2'-dihydroxy-3,3',5,5'-tetra-t-butylbiphenyl; 2,2'-dihydroxy-3,3'-t-butyl-5,5'-dichlorobiphenyl; 2-(2-hydroxy-3-t-butyl-5-methylphenyl)-4-methyl-6-n-hexylphenol; 4,4'-dihydroxy-3,3',5, 5'-tetra-t-butylbiphenyl; 4,4'-dihydroxy-3,3',5,5'-tetramethylbiphenyl; 1,1'-bi-2-naphthol; 1,1'-bi-4-methyl-2-naphthol; 6,6'-dibromo-bi-2-naphthol; 2,2'-methylene-bis(1-naphthol); bis(2-hydroxy-3-t-butyl-5-methylphenyl)methane (CAO-5); 1,1-bis(2-hydroxy-3,5-dimethylphenyl)-3,5,5-trimethylhexane; 4,4'-methylenebis(2,6-di-t-butylphenol); 2,2-bis(4-hydroxy-3-methylphenyl)propane; 4,4'-ethylidenebis(2-t-butyl-6-methylphenol);2,2-bis(3,5-dimethyl-4-hydroxyphenyl)propane; 2,6-di-t-butylphenol; 2,6-di-t-butyl-4-methylphenol; 2,4-di-t-butylphenol; 2,6-dichlorophenol; 2,6-dimethylphenol; 2-t-butyl-6-methylphenol; 1-naphthol; 4-methyl-1-naphthol; 4-methoxy-1-naphthol; 4-chloro-1-naphthol and 2-methyl-1-naphthol.

10. A photothermographic element as claimed in any preceding Claim in which the photothermographic medium additionally comprises an antifoggant selected from mercury (II) salts and tribromethyl, tribromoacyl or tribromomethylsulphonyl derivatives of aryl or heteroaryl compounds.

11. A photothermographic element as claimed in any preceding Claim in which the photothermographic medium is a single layer or comprises two layers, one layer containing binder, the silver halide and non-photosensitive silver source, the other ingredients being in the second layer or distributed between the two layers.

12. A photothermographic element as claimed in Claim 11 in which the photothermographic medium comprises a first layer, nearest the substrate, comprising binder, photosensitive silver halide, non-photosensitive reducible silver salt, reducing agent and antifoggant and a second layer comprising binder and toner.

13. A method of generating a high contrast image which comprises image-wise exposing an element as claimed in any preceding Claim and heat developing at a temperature of from 80 to 250°C for a duration of from 1 second to 2 minutes in a substantially water-free condition after or simultaneously with said exposure.

## Patentansprüche

1. Photothermographisches Element, das eine Bilddichte zur Verfügung stellen kann, die um mindestens 1,2 optische Dichteeinheiten größer als der Untergrundschleier ist, umfassend einen Träger, der mindestens ein photothermographisches Medium trägt, das umfaßt:
(a) ein lichtempfindliches Silberhalogenid;
(b) eine nicht lichtempfindliche, reduzierbare Silberquelle;
(c) ein Reduktionsmittel für die nicht lichtempfindliche, reduzierbare Silberquelle;
(d) einen Toner; und
(e) ein Bindemittel;
wobei der Toner eine Mischung aus Phthalazin und einem Phthalsäurederivat umfaßt und das Reduktionsmittel eine Hydroxamsäureverbindung mit einem Kern der allgemeinen Formel: 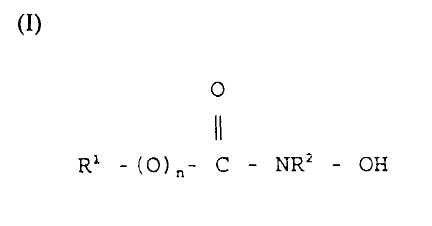 umfaßt, in der:
R¹ ein Alkylrest, ein aromatischer Rest oder ein heterocyclischer Rest bedeutet;
R² ein Wasserstoffatom, ein Alkylrest, ein aromatischer Rest oder ein heterocyclischer Rest bedeutet; und
n 0 oder 1 ist.

2. Photothermographisches Element nach Anspruch 1, wobei R¹ und/oder R² aus linearen, verzweigten und cyclischen Alkylresten, die bis zu 20 Kohlenstoffatome enthalten, und einer Phenyl-, Naphthyl-, Pyridyl-, Furyl-, Quinolinyl-, Thienyl-, Benzthiazolyl- und Piperidinylgruppe ausgewählt sind.

3. Photothermographisches Element nach einem der vorstehenden Ansprüche, wobei die Hydroxamsäureverbindung aus 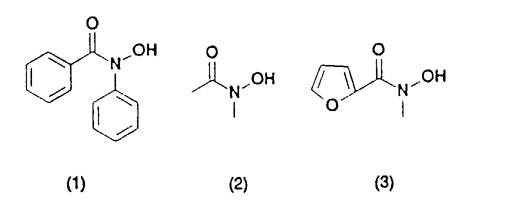 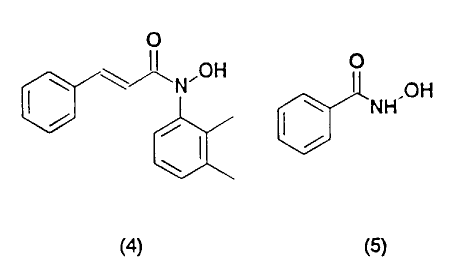 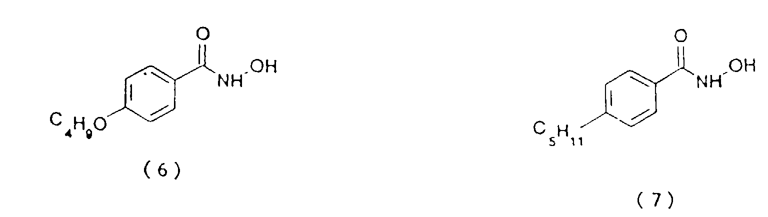 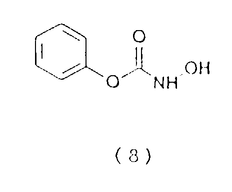 ausgewählt ist.

4. Photothermographisches Element nach einem der vorstehenden Ansprüche, wobei das Phthalsäurederivat einen Kern der folgenden Formel:
R³-A-R⁴
aufweist, wobei:
A ein Phenyl- oder Naphthylring ist, und
R³ und R⁴ Substituenten der Positionen 2 und 3 von A sind und aus -COOH und -CH₂COOH ausgewählt sind oder zusammen einen cyclischen Anhydridrest bilden.

5. Photothermographisches Element nach einem der vorstehenden Ansprüche, wobei das Phthalsäurederivat 4-Methylphthalsäure ist.

6. Photothermographisches Element nach einem der vorstehenden Ansprüche, wobei die Hydroxamsäureverbindung in einer Menge von 0,001 bis 0,2 Mol pro Mol Silber in der Emulsionsschicht, Phthalazin in einer Menge von 0,1 bis 30 g pro Mol Silber in der Emulsionsschicht und das Phthalsäurederivat in einer Menge von 0,1 bis 30 g pro Mol Silber in der Emulsionsschicht vorhanden sind.

7. Photothermographisches Element nach einem der vorstehenden Ansprüche, wobei das Medium weiterhin ein phenolisches Reduktionsmittel umfaßt.

8. Photothermographisches Element nach Anspruch 7, wobei das phenolische Reduktionsmittel ein gehindertes phenolisches Entwicklungsmittel ist, das aus Binaphtholen, Biphenolen, Bis(hydroxynaphthyl)methanen, Bis(hydroxyphenyl)methanen und Naphtholen ausgewählt ist.

9. Photothermographisches Element nach Anspruch 8, wobei das gehinderte phenolische Entwicklungsmittel aus 2,2'-Dihydroxy-3,3'-di-t-butyl-5,5'-dimethylbiphenyl, 2,2'-Dihydroxy-3,3',5,5'-tetra-t-butylbiphenyl, 2,2'-Dihydroxy-3,3'-t-butyl-5,5'-dichlorbiphenyl, 2-(2-Hydroxy-3-t-butyl-5-methylphenyl)-4-methyl-6-n-hexylphenol, 4,4'-Dihydroxy-3,3',5,5'-tetra-t-butylbiphenyl, 4,4'-Dihydroxy-3,3',5,5'-tetramethylbiphenyl, 1,1'-Bi-2-naphthol, 1,1'-Bi-4-methyl-2-naphthol, 6,6'-Dibrom-bi-2-naphthol, 2,2'-Methylen-bis(1-naphthol), Bis(2-hydroxy-3-t-butyl-5-methylphenyl)methan (CAO-5), 1,1-Bis(2-hydroxy-3,5-dimethylphenyl)-3,5,5-trimethylhexan, 4,4'-Methylenbis(2,6-di-t-butylphenol), 2,2-Bis(4-hydroxy-3-methylphenyl)propan, 4,4'-Ethylidenbis(2-t-butyl-6-methylphenol), 2,2-Bis(3,5-dimethyl-4-hydroxyphenyl)propan, 2,6-Di-t-butylphenol, 2,6-Di-t-butyl-4-methylphenol, 2,4-Di-t-butylphenol, 2,6-Dichlorphenol, 2,6-Dimethylphenol, 2-t-Butyl-6-methylphenol, 1-Naphthol, 4-Methyl-1-naphthol, 4-Methoxy-1-naphthol, 4-Chlor-1-naphthol und 2-Methyl-1-naphthol ausgewählt ist.

10. Photothermographisches Element nach einem der vorstehenden Ansprüche, wobei das photothermographische Medium zusätzlich ein Antischleiermittel umfaßt, das aus Quecksilber(II)-Salzen und Tribromethyl-, Tribromacyl- oder Tribrommethylsulphonylderivaten von Aryl- oder Heteroarylverbindungen ausgewählt ist.

11. Photothermographisches Element nach einem der vorstehenden Ansprüche, wobei das photothermographische Medium eine Schicht ist oder zwei Schichten umfaßt, wobei eine Schicht Bindemittel, das Silberhalogenid und nicht lichtempfindliche Silberquelle enthält und die anderen Inhaltsstoffe in der zweiten Schicht sind oder auf die zwei Schichten verteilt sind.

12. Photothermographisches Element nach Anspruch 11, wobei das photothermographische Medium eine erste Schicht, die dem Substrat am nächsten ist und welche Bindemittel, lichtempfindliches Silberhalogenid, nicht lichtempfindliches, reduzierbares Silbersalz, Reduktionsmittel und Antischleiermittel umfaßt und eine zweite Schicht, die Bindemittel und Toner umfaßt, umfaßt.

13. Verfahren zur Erzeugung eines Bildes mit einem hohen Kontrast, umfassend bildweises Belichten eines Elements nach einem der vorstehenden Ansprüche und Wärmeentwickeln bei einer Temperatur von 80 bis 250°C für eine Zeitdauer von 1 Sekunde bis 2 Minuten in einem im wesentlichen wasserfreien Zustand nach oder während des Belichtens.

## Revendications

1. Elément photothermographique capable de fournir une densité d'image qui excède le voile de fond d'au moins 1,2 unité de densité optique, comprenant un support portant au moins un milieu photothermographique comprenant :
(a) un halogénure d'argent photosensible;
(b) une source d'argent réductible, non photosensible;
(c) un agent réducteur pour la source d'argent réductible non photosensible;
(d) un produit de virage; et
(e) un liant;
dans lequel le produit de virage comprend un mélange de phtalazine et d'un dérivé de l'acide phtalique et l'agent réducteur comprend un composé d'acide hydroxamique ayant un noyau de la formule générale : 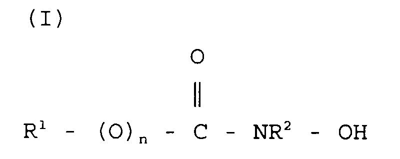 où :
R¹ représente un groupe alkyle, un groupe aromatique ou un groupe hétérocyclique;
R² représente H, un groupe alkyle, un groupe aromatique, ou un groupe hétérocyclique; et
n est 0 ou 1.

2. Elément photothermographique selon la Revendication 1, dans lequel R¹ et/ou R² sont sélectionnés entre des groupes alkyles linéaires, ramifiés et cycliques contenant jusqu'à 20 atomes de carbone, du phényle, du naphthyle, du pyridyle, du furyle, du quinolinyle, du thiényle, du benzthiazolyle et du piperidinyle.

3. Elément photothermographique selon l'une quelconque des revendications précédentes, dans lequel le composé acide hydroxamique est sélectionné entre :

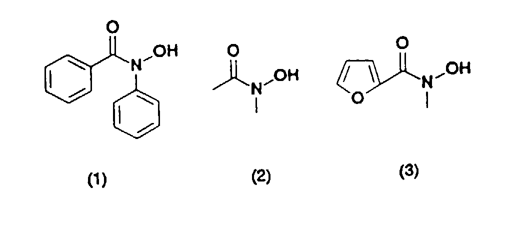

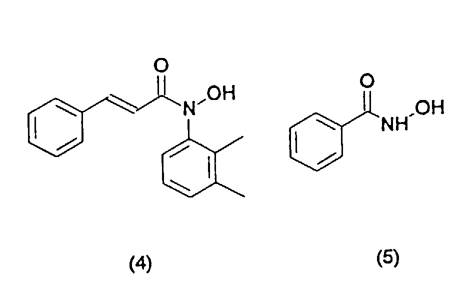

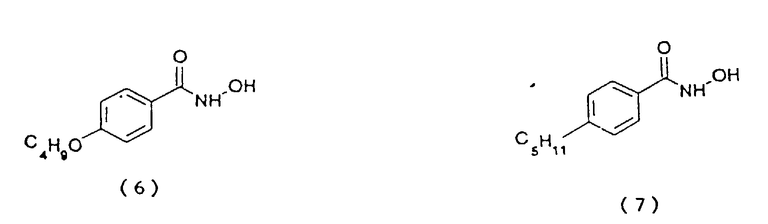

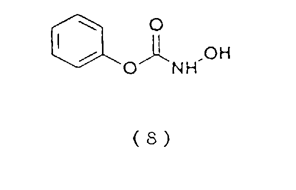

4. Elément photothermographique selon l'une quelconque des revendications précédentes, dans lequel le dérivé d'acide phtalique a un noyau de la formule suivante :
R³-A-R⁴
où :
A est un cycle phénylique ou naphthylique, et
R³ et R⁴ sont des substituants aux positions 2 et 3 de A et sont sélectionnés entre -COOH et -CH₂COOH ou complètent ensemble un groupe anhydride cyclique.

5. Elément photothermographique selon l'une quelconque des revendications précédentes, dans lequel le dérivé d'acide phtalique est l'acide 4-méthylphtalique.

6. Elément photothermographique selon l'une quelconque des revendications précédentes, dans lequel le composé d'acide hydroxamique est présent à raison de 0,001 à 0,2 mole par mol d'argent dans la couche d'émulsion, la phtalazine est présente à raison de 0,1 à 30 grammes par mol d'argent dans la couche d'émulsion, et le dérivé d'acide phtalique est présent à raison de 0,1 à 30 grammes par mol d'argent dans la couche d'argent.

7. Elément photothermographique selon l'une quelconque des revendications précédentes, dans lequel le milieu comprend en outre un agent réducteur phénolique.

8. Elément photothermographique selon la Revendication 7, dans lequel l'agent réducteur phénolique est un révélateur au phénol entravé sélectionné entre les binaphthols, les biphénols, les bis(hydroxynaphtyles) méthanes, les bis(hydroxyphényles) méthanes et les naphthols.

9. Elément photothermographique selon la Revendication 8, dans lequel le révélateur au phénol entravé est choisi entre 2,2'-dihydroxy-3,3'-di-t-butyl-5,5'-diméthylbiphényle; 2,2'-dihydroxy-3,3',5,5'-tétra-t-butylbiphényle; 2,2'-dihydroxy-3,3'-t-butyl-5,5'-dichlorobiphényle; 2-(2-hydroxy-3-t-butyl-5-méthylphényle)-4-méthyle-6-n-hexylphénol; 4,4' dihydroxy-3,3',5,5'-tétra-t-butylbiphényle; 4,4'-dihydroxy-3,3'5,5'-tétraméthylbiphényle; 1,1'-bi-2-naphthol; 1,1'-bi-4-méthyl-2-naphthol; 6,6'-dibromo-bi-2-naphthol; 2,2'-méthylène-bis(1-naphthol); bis(2-hydroxy-3-t-butyl-5-méthylphényle)méthane (CAO-5); 1,1-bis(2-hydroxy-3,5-diméthylphényle)-3,5,5-triméthylhexane; 4,4'-méthylènebis(2,6-di-t-butylphénol); 2,2-bis(4-hydroxy-3-méthylphényle)propane; 4,4'-éthylidènebis (2-t-butyl-6-méthylphénol); 2,2-bis(3,5-diméthyl-4-hydroxyphényle)propane; 2,6-di-t-butylphénol; 2,6-di-t-butyl-4-méthylphénol; 2,4-di-t-butylphénol; 2,6-dichlorophénol; 2,6-diméthylphénol; 2-t-butyl-6-méthylphénol; 1-naphthol; 4-méthyl-1-naphthol; 4-méthoxy-1-naphthol; 4-chloro-1-naphthol et 2-méthyl-1-naphthol.

10. Elément photothermographique selon l'une quelconque des revendications précédentes, dans lequel le milieu photothermographique comprend en outre un antivoile choisi entre les sels de mercure (II) et les dérivés tribrométhylique, tribromoacylique ou tribromométhylsulfonylique de composés d'aryle ou d'hétéroaryle.

11. Elément photothermographique selon l'une quelconque des revendications précédentes, dans lequel le milieu photothermographique est une seule couche ou comprend deux couches, une couche contenant le liant, l'halogénure d'argent et la source d'argent non photosensible, les autres ingrédients étant dans la deuxième couche ou répartis entre les deux couches.

12. Elément photothermographique selon la Revendication 11, dans lequel le milieu photothermographique comprend une première couche, la plus proche du substrat, comprenant le liant, l'halogénure d'argent photosensible, le sel d'argent réductible non photosensible, l'agent réducteur et l'antivoile, et une deuxième couche comprenant le liant et le produit de virage.

13. Procédé de production d'une image à fort contraste qui comprend l'exposition du point de vue de l'image d'un élément selon l'une quelconque des revendications précédentes et le développement thermique à une température de 80 à 250°C pendant une durée de 1 seconde à 2 minutes dans une condition sensiblement exempte d'eau après ladite exposition ou simultanément à celle-ci.
